# EUROPÄISCHE PATENTSCHRIFT

(11) **EP 3 393 864 B1**
(45) Veröffentlichungstag und Bekanntmachung des Hinweises auf die Patenterteilung: **26.07.2023**
(21) Anmeldenummer: 16829079.9
(22) Anmeldetag: 22.12.2016
(51) Int. Cl.: B60R 22/28, B60N 2/28, B60N 2/427

(54) **KINDERSITZ ZUR ANBRINGUNG AUF EINEM KRAFTFAHRZEUGSITZ**
CHILD SEAT FOR ATTACHING TO A MOTOR VEHICLE SEAT
SIÈGE POUR ENFANT DESTINÉ À ÊTRE MONTÉ SUR UN SIÈGE DE VÉHICULE AUTOMOBILE

(30) Priorität: 23.12.2015 DE 202015107068 U
(43) Veröffentlichungstag der Anmeldung: 31.10.2018
(73) Patentinhaber: CYBEX GmbH, 95448 Bayreuth (DE)
(72) Erfinder: PELESKA, Franz, 1220 Wien (AT); THURN, Christoph, 95448 Bayreuth (DE)
(74) Vertreter: Meissner Bolte Partnerschaft mbB
(86) Internationale Anmeldenummer: PCT/EP2016/082490
(87) Internationale Veröffentlichungsnummer: WO 2017/109137

(56) Entgegenhaltungen:
- EP-A2- 1 762 425
- CN-A- 104 627 117
- DE-A1- 4 023 641
- DE-U1-202008 008 884
- US-A1- 2014 252 841

## Beschreibung

Die Erfindung betrifft einen Kindersitz zur Anbringung auf einem Kraftfahrzeugsitz nach Anspruch 1.

Im Stand der Technik sind Kindersitze zur Anbringung auf einem Kraftfahrzeugsitz bekannt. Derartige Kindersitze können ein eigenes Gurtsystem aufweisen oder zur Befestigung mit dem Gurtsystem des Autos ausgebildet sein. Üblicherweise umfasst ein derartiger Kindersitz mindestens eine Sitzschale (Sitzbereich) sowie eine Rückenlehne. Weiterhin kann ein derartiger Kindersitz eine Kopfstütze oder einen Stützfuß oder weitere Komponenten aufweisen.

EP 1 762 425 A2 beschreibt einen Kindersitz, bei dem ein Gurtsystem in verschiedenen Höhen eingestellt werden kann. Um bei einem Aufprall entsprechende Energie zu absorbieren, sind sogenannte Opfer-Energieabsorptionsteile vorgesehen, die bei einem Aufprall entsprechend einreißen und dadurch Energie aufnehmen.

In diesem Zusammenhang sei angemerkt, dass im Rahmen dieser Erfindung der Begriff "Kindersitz" als Oberbegriff für "klassische" Kindersitze und Babyschalen zu verstehen ist. Somit sind für einen Kindersitz vorgesehene Merkmale im

Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

Sogenannte "Babyschalen" umfassen oftmals (nur) eine einteilige Schale zur Aufnahme des Babys oder Kindes und können ein eigenes Gurtsystem, ggf. eine Kopfstütze und ggf. weitere Komponenten umfassen. Anstelle einer (strukturell abgegrenzten) Rückenlehne weisen derartige "Babyschalen" einen Rückenabschnitt auf, der sich an einen "Sitzbereich" anschließt, in dem das Gesäß des Kindes aufgenommen werden kann.

Generell ist es bekannt, dass ein Kind in einem Kindersitz durch den Dreipunkt-Gurt des Autos oder durch einen am Kindersitz selbst vorgesehenen Gurt (beispielsweise ein Fünfpunkt-Gurt, ein Brust-Gurt oder dergleichen) gesichert wird. Dabei kann ein Gurt über eine Schulter des im Sitz befindlichen Kindes in Richtung einer gegenüberliegenden Beckenseite geführt sein. Es können aber auch zwei Gurte vorgesehen sein, die jeweils über eine der Schultern geführt sind. Zumindest für Sitze mit eigenem Gurtsystem ist es allgemein bekannt, eine Anpassung der Lage des Gurtsystems an die Größe des Kindes zu ermöglichen. Insbesondere sind Lösungen bekannt, bei denen verschiedene Positionen des Gurtsystems über einen formschlüssigen Eingriff eines geeigneten Elementes, beispielsweise in eine Zahnleiste arretiert werden können.

Gemeinsam ist diesen bekannten Systemen, dass sich das im Sitz befindliche Kind - im Falle eines Aufpralls des Autos - aufgrund der Massenträgheit zunächst weiterbewegt und dann durch die Gurte abrupt abgebremst wird. Der Kopf des Kindes bewegt sich jedoch noch weiter, wodurch es zu einer Nickbewegung und einem Aufschlag des Kinns auf die Brust kommen kann, wodurch gefährliche Verletzungen, etwa im Bereich der Nackenwirbel, verursacht werden können.

Aus diesem Grund ist es im Allgemeinen erstrebenswert, die Beschleunigung des Kindes zu begrenzen und Kraftspitzen abzufangen. Hierzu sind im Stand der Technik entsprechende Kraftbegrenzer bekannt, die Kraftspitzen abfangen können. Beispielsweise wird in der DE 10 2005 038 814 A1 der Einsatz eines Hydraulikelementes vorgeschlagen, das bei Belastung des Gurtes im Falle eines Aufpralls das Energieaufnahmevermögen des Gurtes erhöht. In der EP 0 805 066 A2 wird ein plastisch verformbarer Torsionsstab vorgeschlagen, der sich im Falle eines Aufpralls verformt und dadurch Energie aufnimmt bzw. eine Kraftspitze abfängt.

Die DE 10 2005 025 570 A1 schlägt ebenfalls den Einsatz eines plastisch verformbaren Bauteils, konkret eines Halters für die Gurte vor, der einen zur Verformung vorgesehenen Bereich aufweist. Als ergänzendes Kraftbegrenzungsmittel werden Reißnähte im Gurt erwähnt, die im Falle einer zu hohen Kraft einen Gurtabschnitt definiert freigeben, so dass sich der Körper des im Sitz befindlichen Kindes weiter nach vorne bewegen kann und dadurch Verzögerungsenergie abgebaut werden kann. In DE 10 2005 025 570 A1 muss zur Anpassung an Größe bzw. Gewicht des Kindes ein vollständiger Austausch des Kraftbegrenzers erfolgen. Auch die DE 101 07 874 A1 beschreibt sich plastisch verformende Kraftbegrenzungsmittel, deren Kraftbegrenzungsschwelle sich in Abhängigkeit von der eingestellten Gurtlänge bzw. -lage ändert. Dazu werden beispielsweise mehrere Umlenkungen vorgesehen, die unterschiedliche Materialstärken aufweisen. Durch das Umhängen des Gurtsystems auf eine andere Umlenkeinrichtung soll das Kraftbegrenzungsmittel gemäß DE 101 07 874 A1 an Größe bzw. Gewicht des Kindes angepasst werden können.

Insgesamt wird es als nachteilhaft angesehen, dass die Anpassung (soweit überhaupt möglich) von Kraftbegrenzungsmitteln an Größe bzw. Gewicht des Kindes im Stand der Technik immer in einem vergleichsweise aufwändigen Schritt durchgeführt werden muss. So muss beim Austausch der Halter gemäß DE 10 2005 025 570 A1 ebenso wie beim Umhängen der Gurte gemäß DE 101 07 874 A1 das Gurtsystem neu eingerichtet werden, beispielsweise aus- und wieder eingefädelt werden.

Es ist Aufgabe der Erfindung, einen Kindersitz zur Anbringung auf einem Kraftfahrzeugsitz vorzuschlagen, der auf einfache und sichere Art und Weise eine Kraftbegrenzung im Falle eines Aufpralls realisiert.

Diese Aufgabe wird durch einen Kindersitz gemäß Anspruch 1 gelöst.

Insbesondere wird die Aufgabe durch einen Kindersitz zur Anbringung an einem Kraftfahrzeug gelöst, umfassend einen Sitzbereich und einen Rückenabschnitt (Rückenlehne), mindestens einen Schultergurt, mindestens eine Halteeinrichtung zum Festhalten und/oder Umlenken des Schultergurts, und mindestens ein Kraftbegrenzungsmittel, das derart ausgebildet ist, dass die Halteeinrichtung bei Überschreiten einer vorbestimmten Grenzkraft, die vom Schultergurt (oder von den Schultergurten, falls die Halteeinrichtung zum Halten und/oder Umlenken von zwei Schultergurten ausgebildet ist) im Falle eines Aufpralls auf die Halteeinrichtung wirkt, von einer ersten arretierten Position in eine zweite arretierte Position überführt wird (so dass eine an das Kind zurückhaltende Kraft reduziert wird bzw. Energie aufgenommen wird).

Ein Kerngedanke der Erfindung liegt darin, dass die Halteeinrichtung grundsätzlich zwei (vorbestimmte) Positionen einnehmen kann, wobei die zweite Position (im Falle eines Unfalls) erst bei Überschreiten einer vorbestimmten Grenzkraft erreicht wird. Die (gesamte) Halteeinrichtung wird also zum Abfangen von Kraftspitzen bzw. zur Energieaufnahme im Falle eines Aufpralls verlagert. Die Halteeinrichtung bleibt bei dieser Verlagerung (vorzugsweise) formstabil (ändert ihre Form also nicht). Das Kraftbegrenzungsmittel ist vorzugsweise so ausgebildet, dass, wenn die zweite Position erreicht ist und der Körper des Kindes wieder zur Ruhe gekommen ist (also nach dem Aufprall) bzw. keine Kraft mehr vom Schultergurt her wirkt, die Halteeinrichtung in der zweiten Position verbleibt. Sowohl in der ersten Position als auch in der zweiten Position ist die Halteeinrichtung vorzugsweise (insbesondere formschlüssig) verrastet, nimmt also eine erste bzw. zweite Rastposition ein. Insgesamt sind Kraftbegrenzungsmittel und Halteeinrichtung vorzugsweise so konfiguriert, dass zumindest eine Komponente der auf die Halteeinrichtung wirkenden Kraft in Richtung einer Verbindungslinie zwischen den einzelnen (Rast-) Positionen wirkt. Die Verrastung (Arretierung) ist vorzugsweise formschlüssig, kann jedoch alternativ oder zusätzlich (zumindest anteilig, ggf. vollständig) kraftschlüssig erfolgen. Durch die (vorbestimmten) Arretier-Positionen (insbesondere Rastpositionen) kann einerseits auf einfache Art und Weise eine Kraftspitze abgefangen werden und andererseits wird der Schultergurt sowohl vor als auch nach dem Aufprall sicher und zuverlässig gehalten. Weiterhin zeichnet sich das mindestens eine Kraftbegrenzungsmittel durch einen einfachen Aufbau aus, so dass Herstellungskosten reduziert werden.

Es ist mindestens eine Verstelleinrichtung zum Einstellen von mindestens zwei verschiedenen Positionen, umfassend mindestens die erste und die zweite arretierte Position (insbesondere Rastposition), der Halteeinrichtung gegenüber dem Rückenabschnitt (der Rückenlehne) zur Anpassung der Gurtlänge und/oder - lage an die Größe und/oder das Gewicht eines in dem Kindersitz befindlichen Kindes, vorgesehen. Durch eine derartige Verstelleinrichtung kann der Kindersitz auf einfache Art und Weise auf die Bedürfnisse des Kindes angepasst werden. In einer bevorzugten und besonders einfachen Bauart, kann eine Verlagerung von einer ersten in eine zweite (Rast-) Position einerseits durch Betätigen der Verstelleinrichtung (beispielsweise über einen Griff) und andererseits (im Falle eines Aufpralls) durch die Wirkung des Kraftbegrenzungsmittels erfolgen. Ein solcher Aufbau ist besonders einfach und schützt zuverlässig vor den Folgen eines Aufpralls. Bei der Verstelleinrichtung handelt es sich insbesondere um eine Höhenverstelleinrichtung, so dass der Kindersitz an die Größe des Kindes angepasst werden kann. Dazu kann die Halteeinrichtung in den verschiedenen (Rast-) Positionen arretiert werden.

Vorzugsweise ist mindestens eine Rasteinrichtung vorgesehen, über die die Halteeinrichtung in (den) zumindest zwei Positionen arretierbar ist, insbesondere in (den) mindestens zwei Rastpositionen einrastet. Konkret können dazu mindestens zwei komplementär ausgebildete Rastelemente vorgesehen sein (beispielsweise ein Vorsprung, insbesondere Riegel und eine dazu korrespondierende Ausnehmung, insbesondere Tasche). Grundsätzlich kann die Arretierung über einen Form- und/oder Kraftschluss erfolgen. Beispielsweise kann ein Verriegelungselement in eine taschenartige Struktur eingreifen, wobei ggf. die einzelnen Taschen durch mindestens einen Steg (oder dergleichen) voneinander getrennt sind. Es ist jedoch auch möglich, dass ein Verriegelungselement (Vorsprung) in eine Zahnleiste (bzw. deren Aufnahmen) oder eine Lochleiste (bzw. deren Löcher) oder in eine andere geeignete Struktur eingreift. In jedem Fall wird durch eine derartige Arretierung ein zuverlässiger und einfacher Halt der Halteeinrichtung in ihrer jeweiligen Position ermöglicht, was die Sicherheit im Falle eines Unfalls erhöht. Konkret können die einzelnen Positionen durch einzelne Aufnahmen (insbesondere Taschen) und/oder Vorsprünge und/oder (durchgehende oder unterbrochene) Verbindungsstege, die vorzugsweise Bestandteile eines einstückigen Bauteils sind, und/oder durch eine Zahnleiste und/oder eine Lochleiste definiert werden.

In einer bevorzugten Ausführungsform kann die Halteeinrichtung (vorzugsweise über die Verstelleinrichtung) in mindestens drei Positionen gebracht werden, wobei bei Überschreiten einer ersten Grenzkraft die nächste Position eingenommen wird und bei Überschreiten einer zweiten Grenzkraft eine weiter entfernt liegende (insbesondere übernächste) Position eingenommen wird. Im Allgemeinen ist es möglich, dass bei genügend lang einwirkender und ausreichend großer Kraft mehrere (Rast-) Positionen sukzessive überwunden werden. Durch jeden Übergang von einer Position in die benachbarte Position (z.B. jeden Steg der zwischen zwei Aufnahmen, insbesonere Taschen platziert ist) kann ein Kraftbegrenzungsmittel zur Verfügung gestellt werden. Diese Ausführungsform erlaubt eine äußerst einfache ("automatische") Einstellung der Kraftbegrenzung bzw. Energieaufnahme. Bei einem eher kleinen bzw. leichten Kind kann (im Falle eines Aufpralls) beispielsweise nur die nächste Position eingenommen werden, bei einem größeren Kind die übernächste, bei einem noch größeren Kind ggf. die darauffolgende Position. Es ist dann also nicht mehr notwendig, dass die Kraftbegrenzung durch den Benutzer im Hinblick auf die Größe und das Gewicht des Kindes (mit entsprechendem Risiko einer Fehlbedienung) eingestellt wird. Der Kindersitz ist dann schon per se entsprechend "adaptiv" ausgebildet. Dadurch kann das im Stand der Technik vorliegende Problem, dass durch eine Fehlbedienung sogar besonders ausgeprägte Kraftspitzen auftreten, auf einfache Art und Weise reduziert werden.

Vorzugsweise ist die Halteeinrichtung mit einer Kopfstütze verbunden und/oder gemeinsam mit der Kopfstütze verlagerbar. In einem solchen Fall kann der Schultergurt auf einfache Art und Weise und zuverlässig an die Größe des Kindes angepasst werden, nämlich dann, wenn die Kopfstütze an die Größe des Kindes angepasst wird. Auch dadurch wird die Sicherheit im Falle eines Aufpralls erhöht.

In einer konkreten Ausführungsform kann die Verstelleinrichtung einen Griff, insbesondere zum vorzugsweise ziehenden Lösen der Arretierung aufweisen. Alternativ oder zusätzlich kann eine Feder, insbesondere Rückstellfeder, zum Herstellen der Arretierung vorgesehen sein. Dadurch kann eine (Höhen-) Verstellung der Halteeinrichtung und ggf. der Kopfstütze auf einfache Weise und schnell erfolgen.

Beispielsweise kann zur regulären Verstellung des arretierten Gurtsystems das Verriegelungselement durch Betätigen eines geeigneten Mechanismus (beispielsweise durch Ziehen an einem Griff gegen eine Federkraft) aus einer entsprechenden Tasche bewegt, dann die Position des Gurtsystems wie gewünscht eingestellt werden und das Verriegelungselement wieder in eine Tasche bewegt werden (beispielsweise durch Loslassen des Griffs und ggf. das Wirken der Federkraft). Vorzugsweise kann die Entriegelung auch dann erfolgen, wenn der Sitz im Fahrzeug eingebaut ist und ein Kind darin sitzt, beispielsweise indem der Griff, ggf. ein Hebel und/oder Schalter oder dergleichen, zur Entriegelung der Höhenverstellung an einem oberen Ende des Sitzes angebracht und damit jederzeit zugänglich ist.

Vorzugsweise werden die Kraftbegrenzungsmittel durch Bereiche zwischen den arretierten Positionen (beispielsweise durch Stege zwischen Taschen oder Erhebungen bzw. Zähnen einer Zahnleiste) gebildet. Weiter vorzugsweise ist mindestens ein Abschnitt zwischen zwei Rasteinrichtungen (beispielsweise Taschen oder generell Ausnehmungen) bei Überwinden der Grenzkraft plastisch oder elastisch verformbar und/oder wird zerstört, insbesondere bricht oder reißt. Im Allgemeinen sollen diese Zwischenabschnitte vorzugsweise so gestaltet sein, dass sie bei einer die Grenzkraft überschreitenden Kraft (in Richtung einer Verbindungslinie zwischen den einzelnen arretierten Positionen) die Überführung in eine benachbarte Position ermöglichen.

In einer konkreten Ausführungsform ist zwischen zwei Rasteinrichtungen (beispielsweise Taschen) mindestens ein Steg angeordnet, der vorzugsweise bei Überschreiten der vorbestimmten Grenzkraft plastisch verformt wird oder bricht derart, dass die Halteeinrichtung von der einen in die andere Position überführt wird. Weiter vorzugsweise sind mehrere Stege (und zugeordnete drei oder mehr Rasteinrichtungen, insbesondere drei oder mehr Taschen) vorgesehen, wobei die Stege verschieden dick ausgeführt sind. Durch einen solchen Steg kann einfach und effektiv ein Kraftbegrenzungsmittel bereitgestellt werden. Wenn mehrere Stege mit unterschiedlicher Dicke bereitgestellt werden, können abhängig von der jeweiligen Position, in der sich die Halteeinrichtung befindet, verschiedene zu überwindende Grenzkräfte eingestellt werden. Die Dicke der Stege kann in eine Richtung zunehmen. Wenn beispielsweise vier Stege vorgesehen sind, wobei diese vier Stege in der Reihenfolge erster-Steg-zweiter-Steg-dritter-Steg-vierter Steg angeordnet sind, kann der jeweils nächste Steg (beispielsweise der dritte Steg) dicker ausgebildet sein als der jeweils davor angeordnete (beispielsweise zweite Steg). In einer solchen Konfiguration kann insbesondere der dickste Steg am höchsten positioniert sein, so dass dann, wenn sich die Halteeinrichtung in einer vergleichsweise hohen Position befindet (was einem großen bzw. schweren Kind entspricht), eine hohe Grenzkraft bereitgestellt wird und dann, wenn sich die Halteeinrichtung in einer eher niedrigen Position befindet (was einem eher kleinen bzw. leichten Kind entspricht) eine eher geringe Grenzkraft zur Verfügung gestellt wird. Generell können (bei mehreren Stegen) diese in verschiedener Dicke ausgeführt sein. Es ist jedoch auch denkbar, dass diese durch verschiedene Materialien gebildet werden, wobei sich diese hinsichtlich ihrer Widerstandskraft (oder gegenüber einer Verformung oder einem Brechen) unterscheiden. Zwischen zwei Rastpositionen kann ggf. genau ein Steg vorgesehen sein, alternativ jedoch mehrere Stege (bzw. ein unterbrochener Steg). Anstelle eines Steges können auch (beispielsweise zwei) Federn, insbesondere Blattfedern vorgesehen sein, die sich im Falle eines Aufpralls elastisch verformen und bei Überschreiten der Grenzkraft eine Überführung in eine andere (Rast-) Position ermöglichen. Andere Mittel zur elastischen Verformung (anstelle von Blattfedern) sind denkbar.

In einer konkreten Ausführungsform kann die Halteeinrichtung (vorzugsweise über die Verstelleinrichtung) mindestens drei (arretierte) Positionen, nämlich mindestens eine erste, eine zweite und eine dritte Position, gebracht werden. Vorzugsweise ist eine Grenzkraft - insbesondere definiert durch die strukturelle Ausbildung (z.B. Materialwahl und/oder Dicke) von Zwischenbereichen - zum Verlagern von der ersten in die zweite Position im Falle eines Aufpralls höher (oder niedriger), insbesondere um mindestens 5%, vorzugsweise mindestens 10%, als eine Grenzkraft zum Verlagern von der zweiten in die dritte Position. Vorzugsweise handelt es sich bei der ersten Position um eine höchste Position, bei der zweiten Position um eine mittlere Position, und bei der dritten Position um eine niedrigste Position der Halteeinrichtung. Insgesamt kann dadurch eine benutzerfreundliche und sichere Einstellung der Kraftbegrenzung realisiert werden.

In einer konkreten Ausführungsform umfasst das mindestens eine Kraftbegrenzungsmittel eine Schrägfläche, die derart angeordnet und ausgebildet ist, dass ein Verriegelungselement (erst) bei Überschreiten der Grenzkraft aus einer verriegelten (arretierten) Position herausgleitet, wobei die Schrägfläche vorzugsweise an dem Verriegelungselement oder an einer Riegelaufnahme vorgesehen ist. Dadurch kann auf einfache Art und Weise eine Kraftbegrenzung erfolgen.

In weiteren konkreten Ausführungsformen weist das Kraftbegrenzungsmittel ein zumindest abschnittsweise konvexes oder trapezförmiges Verriegelungselement auf. Auch dadurch kann auf einfache Art und Weise eine Kraftbegrenzung erfolgen.

Im Allgemeinen kann das Kraftbegrenzungsmittel zumindest eine Feder, insbesondere Blattfeder, umfassen. Durch eine derartige Feder kann ein Kraftbegrenzungsmittel durch elastische Verformung derselben realisiert werden, so dass der Kindersitz (nach dem Aufprall) wieder in seinen ursprünglichen Zustand gebracht wird (abgesehen davon, dass eine andere arretierte Position eingenommen wird, falls die vorbestimmte Grenzkraft überschritten wird).

Grundsätzlich sollte die Grenzkraft an das Gewicht des Kindes angepasst werden. Die Grenzkraft kann mindestens 500 N, vorzugsweise mindestens 1000 N, weiter vorzugsweise mindestens 1500 N und/oder höchstens 21000 N, vorzugsweise höchstens 17000 N, weiter vorzugsweise höchstens 15000 N betragen. Generell kann eine Belastung von (etwa) 50 g (also der 50fachen Erdbeschleunigung) im Falle eines Aufpralls zumindest kurzzeitig toleriert werden. Das Maß für die Kraftschwelle ergibt sich somit vorteilhafterweise aus diesem Limit und dem Gewicht des Kindes. Im Falle von Kindersitzen kann das zulässige Gewicht bei maximal 36 kg liegen. Das minimale Gewicht beispielsweise für Babyschalen kann ca. 2,5 kg betragen. Im Falle von unterschiedlichen Grenzkräften (bei mehr als zwei arretierten Positionen bzw. entsprechenden Kraftbegrenzungsmitteln) kann die Grenzkraft in der höchsten Position in einem oberen Bereich liegen (beispielsweise im Bereich von 12000 bis 21000 N) und in der niedrigsten Position in einem unteren Bereich (beispielsweise 500 N bis 11000 N). Gegebenenfalls können sich (beispielsweise durch eine flaschenzugartige Umlenkung) auch andere Kraftschwellen (Grenzkräfte) für das Kraftbegrenzungsmittel ergeben. In jedem Fall sollte die Belastung für das im Sitz befindliche Kind auf 40 bis 60 g, bevorzugt 45 bis 55 g beschränkt werden.

Gemäß einem allgemeinem Gedanken unterscheiden sich die Positionen der Halteeinrichtung, die gewollt (vor der Fahrt) durch die Verstelleinrichtung eingestellt werden können zumindest teilweise von den Positionen, die im Falle eines Aufpralls durch das Wirken des mindestens einen Kraftbegrenzungsmittels eingenommen werden können. Beispielsweise können dazu separate Rasteinrichtungen für die gewollte Einstellung einerseits und für die Kraftbegrenzung andererseits vorliegen. In einer konkreten Ausführungsform kann die Verstelleinrichtung ein Verstellelement umfassen, das mehrere Positionen zur Einstellung der Gurtlänge oder -lage definiert und so gelagert ist, dass es bei Überschreiten einer Grenzkraft (selbst) eine andere Position einnimmt. Alternativ kann das Kraftbegrenzungsmittel ein Kraftbegrenzungselement umfassen, das ausgebildet ist, um die Halteeinrichtung bei Überschreiten einer vorbestimmten Grenzkraft, die vom Schultergurt auf die Halteeinrichtung wirkt, von der ersten in die zweite Position zu verlagern, wobei das Kraftbegrenzungselement (selbst) in mehrere Positionen verbracht werden kann. Bei derartigen Ausführungsformen ist also eine Positionsänderung aufgrund einer Überschreitung einer Grenzkraft im Falle eines Aufpralls nicht identisch zu einer entsprechenden Positionsverlagerung, die bewusst zur Höheneinstellung der Halteeinrichtung durchgeführt wird. Durch eine derartige Trennung der verschiedenen Positionsänderungen wird eine besonders effektive und zuverlässige Einstellung sowohl der Kraftbegrenzung im Falle eines Unfalls als auch der Gurtlänge bzw. -lage ermöglicht (vor der Fahrt).

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1a: eine schematische Ansicht eines Ausschnittes eines Kindersitzes ohne das erfindungsgemäße Kraftbegrenzungsmittel;
- Fig. 1b: einen Schnitt gemäß Linie Ib-Ib aus Fig. 1a;
- Fig. 2: einen Ausschnitt des erfindungsgemäßen Kindersitzes analog Fig. 1a;
- Fig. 3a: eine schematische Darstellung von weiteren Ausführungsformen des erfindungsgemäßen Kindersitzes analog Fig. 2;
- Fig. 3b: eine Schrägansicht einer weiteren Ausführungsform des Ausschnittes analog Fig. 2;
- Fig. 4: verschiedene Ausführungsformen von Kraftbegrenzungsmitteln analog der Darstellungen in Fig. 1 und 2;
- Fig. 5: einen Schnitt analog Fig. 1b durch einen Ausschnitt einer weiteren Ausführungsform des Kindersitzes;
- Fig. 6a: eine Schrägansicht eines Ausschnittes einer weiteren Ausführungsform des Kindersitzes;
- Fig. 6b: eine Seitenansicht des Ausschnittes gemäß Fig. 6a;
- Fig. 6c: eine weitere Schrägansicht des Ausschnittes gemäß Fig. 6a;
- Fig. 7a: eine Schrägansicht eines Ausschnittes einer weiteren Ausführungsform des Kindersitzes;
- Fig. 7b: eine Seitenansicht des Ausschnittes gemäß Fig. 7a;
- Fig. 7c: eine weitere Schrägansicht des Ausschnittes gemäß Fig. 7a;
- Fig. 8a: einen schematischen Ausschnitt einer weiteren Ausführungsform des erfindungsgemäßen Kindersitzes;
- Fig. 8b: einen schematischen Ausschnitt einer weiteren Ausführungsform des erfindungsgemäßen Kindersitzes;
- Fig. 8c: einen schematischen Ausschnitt einer weiteren Ausführungsform des erfindungsgemäßen Kindersitzes;
- Fig. 9: einen schematischen Ausschnitt einer weiteren Ausführungsform des erfindungsgemäßen Kindersitzes;
- Fig. 10a: einen Ausschnitt einer weiteren Ausführungsform des erfindungsgemäßen Kindersitzes;
- Fig. 10b: einen Schnitt entlang Linie Xb-Xb in Fig. 10a;
- Fig. 11: einen Ausschnitt einer weiteren Ausführungsform des erfindungsgemäßen Kindersitzes;
- Fig. 12a: einen schematischen Ausschnitt einer weiteren Ausführungsform des erfindungsgemäßen Kindersitzes;
- Fig. 12b: den Ausschnitt gemäß Fig. 12a in einer abweichenden Position eines Verriegelungselementes;
- Fig. 13: eine Explosionsdarstellung eines erfindungsgemäßen Kindersitzes;
- Fig. 14: einen vergrößerten Ausschnitt aus Fig. 13; und
- Fig. 15: einen Stufenschnitt eines Ausschnittes aus Fig. 13.

In der nachfolgenden Beschreibung werden für gleiche und gleichwirkende Teile dieselben Bezugsziffern verwendet.

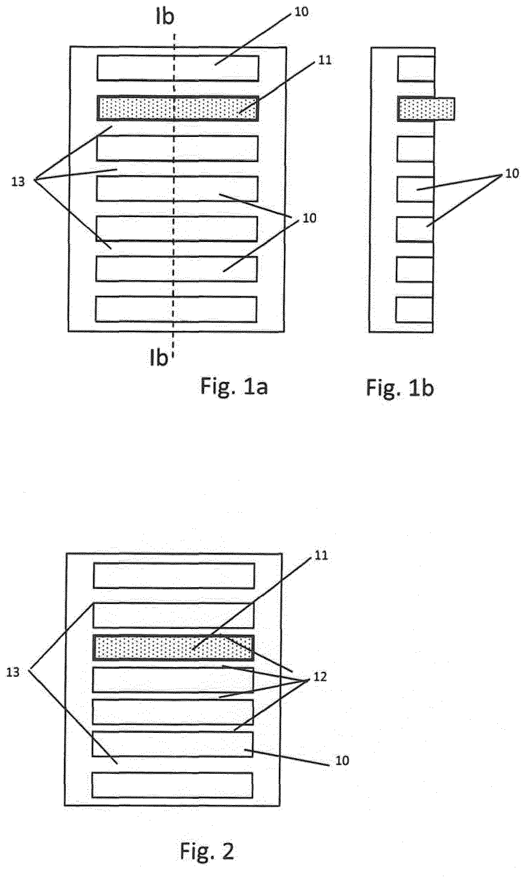

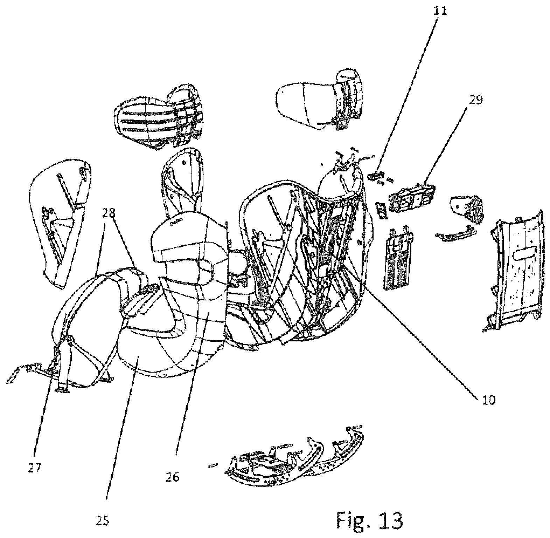

Fig. 1 zeigt einen Ausschnitt eines Kindersitzes ohne erfindungsgemäße Kraftbegrenzungsmittel. Bei dem Ausschnitt kann es sich beispielsweise um eine Struktur handeln, die auf einer Rückseite des Kindersitzes, insbesondere einer Rückseite einer Rückenlehne oder eines Rückenabschnittes angeordnet ist. So zeigen die Fig. 1a und 1b eine Struktur zur Einstellung einer (hier nicht gezeigten) Halteeinrichtung 29 (siehe Figur 13 bis 15) für einen Schultergurt hinsichtlich ihrer Position, insbesondere Höhe. Dazu sind (Aufnahme-) Taschen 10 vorgesehen, in die ein Verriegelungselement 11 eingreifen kann. Das Verriegelungselement 11 kann in jede der Taschen 10 (in Fig. 1a und 1b beispielhaft in der zweiten Tasche 10 von oben) untergebracht werden. Weiterhin ist das Verriegelungselement 11 Bestandteil der Halteeinrichtung für den Schultergurt oder zumindest mit einer solchen Halteeinrichtung verbunden. Grundsätzlich können (falls zwei Schultergurte vorgesehen sind) die Schultergurte in je einer eigenen Halteeinrichtung gehalten werden, vorzugsweise werden jedoch beide Schultergurte durch eine Halteeinrichtung 29 (siehe Figuren 13 bis 15) gehalten.

Fig. 2 zeigt einen Ausschnitt analog Fig. 1a eines erfindungsgemäßen Kindersitzes. Die Struktur gemäß Fig. 2 unterscheidet sich von der Struktur gemäß Fig. 1a und 1b durch das Vorsehen von (vergleichsweise dünnen) Stegen 12 zwischen einzelnen der Taschen (konkret der zweiten Tasche von oben bis zur zweiten Tasche von unten). Die Stege 12 sind so ausgebildet, dass sie bei Überschreiten einer Grenzkraft (wie sie beispielsweise bei einem Aufprall-Unfall auftritt) plastisch verformt werden oder sogar brechen und dadurch die Überführung des Verriegelungselementes 11 in die nächste Position ermöglichen (beispielsweise könnte im Falle eines Unfalls der zweite Steg 12 von oben brechen und dadurch eine Überführung des Verriegelungselementes 11 von der dritten in die vierte Tasche (von oben) erlauben). Weiterhin sind gemäß Fig. 2 noch zwischen jeweils den beiden obersten und den beiden untersten Taschen 10 Trennbereiche 13 vorgesehen, die (wie auch die entsprechenden Trennbereiche 13 in den Fig. 1a und 1b) kein Kraftbegrenzungsmittel bilden, da diese selbst bei maximal auftretenden Kräften eine Auflösung der Verriegelung durch das Verriegelungselement in der entsprechenden Tasche nicht erlauben. Beispielsweise halten diese Trennbereiche 13 auch noch einer Kraft (die in Richtung der nächsten Tasche wirkt) von mehr als 21000 N, vorzugsweise mehr als 25000 N stand.

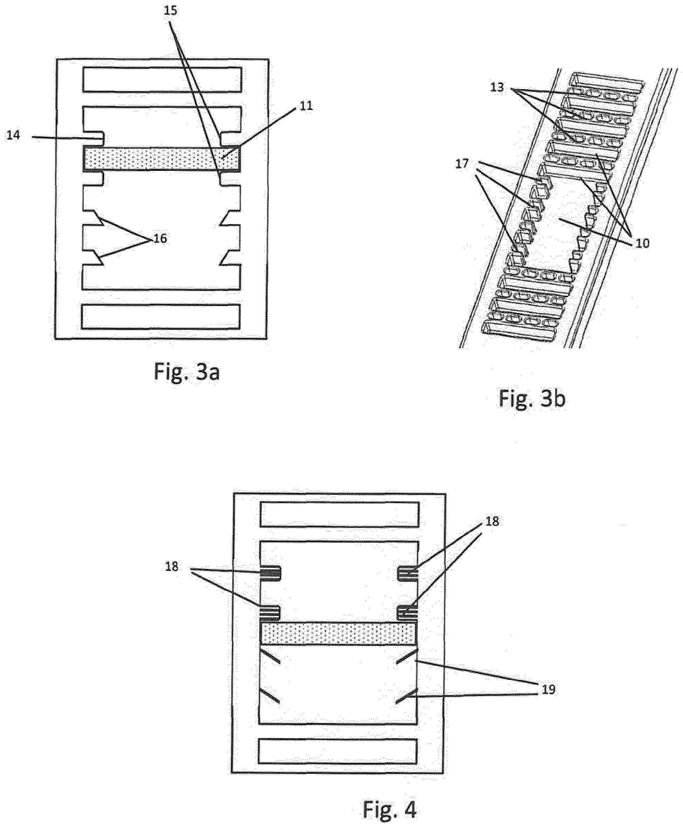

In der alternativen Ausführungsform gemäß Fig. 3a sind (gegenüber der Ausführungsform gemäß Fig. 2) die Stege teilweise "herausgenommen". Mit anderen Worten ist je ein Steg 12 (gemäß Fig. 2) durch zwei Vorsprünge (Stegansätze) 14, die aufeinander gerichtet sind, ersetzt. Eine Tasche 10 kann dann beispielsweise durch vier Vorsprünge 14 definiert werden. Die Vorsprünge 14 können entweder ein gerades Ende 15 (wie dies in Fig. 3a für die vier oberen Vorsprünge 14 gezeigt ist) oder ein schräges Ende 16 (wie dies in Fig. 3a für die vier unteren Vorsprünge 14 gezeigt ist) aufweisen. Generell kann ein abgeschrägtes Ende das Herausgleiten des Verriegelungselementes 11 in die nächste Position begünstigen (so dass eine geringere Grenzkraft bereits zu einem Überführen in die nächste Position ausreicht). Insbesondere können durch verschiedene schräge Winkel verschiedene Grenzkräfte (Kraftschwellen) eingestellt werden, beispielsweise können die jeweiligen Enden der Vorsprünge 14 von oben nach unten immer weiter abgeflacht verlaufen.

Fig. 3b zeigt eine Schrägansicht einer Ausführungsform analog Fig. 3a mit weiteren Details. Insbesondere ist dort zu erkennen, dass anstelle von einzelnen Vorsprüngen 14 Vorsprungspaare 17 vorgesehen sein können, wobei durch je vier Vorsprungspaare 17 eine Tasche 10 definiert werden kann. Weiterhin kann eine Tasche 10 durch zwei Vorsprungspaare 17 und einen (unüberwindbaren) Trennbereich 13 gebildet werden. Weiterhin kann auch eine Tasche durch zwei (unüberwindbare) Trennbereiche 13 gebildet werden.

Fig. 4 zeigt weitere Ausführungsformen der Erfindung in einer schematischen Ansicht. Insbesondere ist gezeigt, dass - anstelle der in Fig. 3a und 3b gezeigten Vorsprünge (Stegansätze) - elastische Vorsprünge 18 ausgebildet sein können. Weiterhin können die Vorsprünge 14 durch ebenfalls in Fig. 4 gezeigte Blattfedern 19 (oder sonstige Federn) ersetzt werden. Generell können sich die verwendeten Vorsprünge plastisch oder elastisch verformen oder auch (bei Überwinden der Kraftschwelle) brechen.

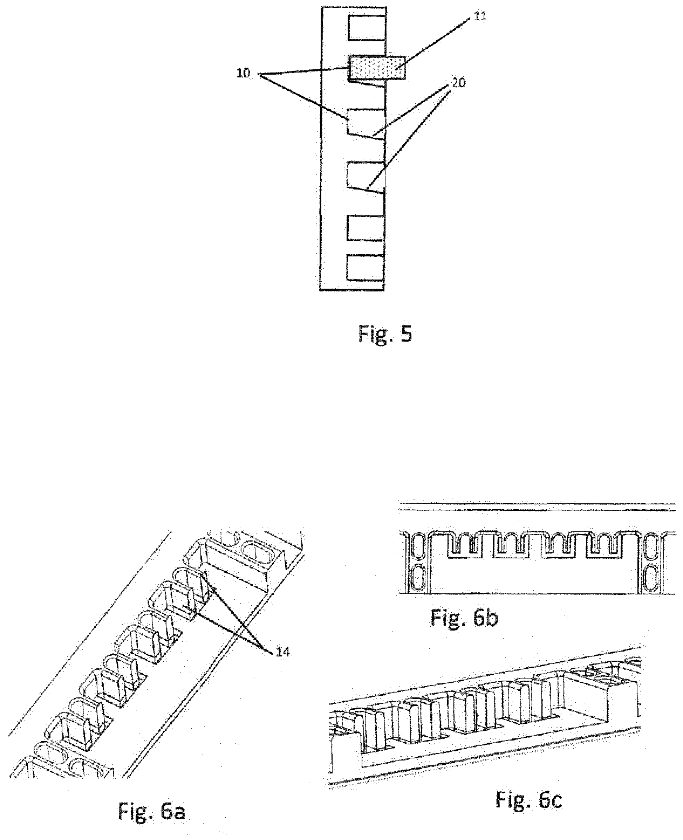

Fig. 5 zeigt in einem Schnitt analog Fig. 1b eine weitere Ausführungsform. Hier sind die Stege geometrisch (konkret durch eine leichte Schräge der kraftbelasteten Seitenfläche) so gestaltet, dass eine größere Komponente der einwirkenden Kraft das Verriegelungselement gegen den Steg drückt und eine kleinere Komponente das Verriegelungselement aus der Tasche hebt. Bei Überschreiten einer Kraftschwelle überwindet die kleinere Kraftkomponente den durch die größere Kraftkomponente erzeugten Reibungswiderstand und das Verriegelungselement 11 wird aus der Tasche 10 gehoben bzw. rutscht über die Schräge 20 in die nächste Tasche. Auf entsprechende Art und Weise können auch Lösungen für Zahn- oder Lochleisten oder Ähnliches bereitgestellt werden.

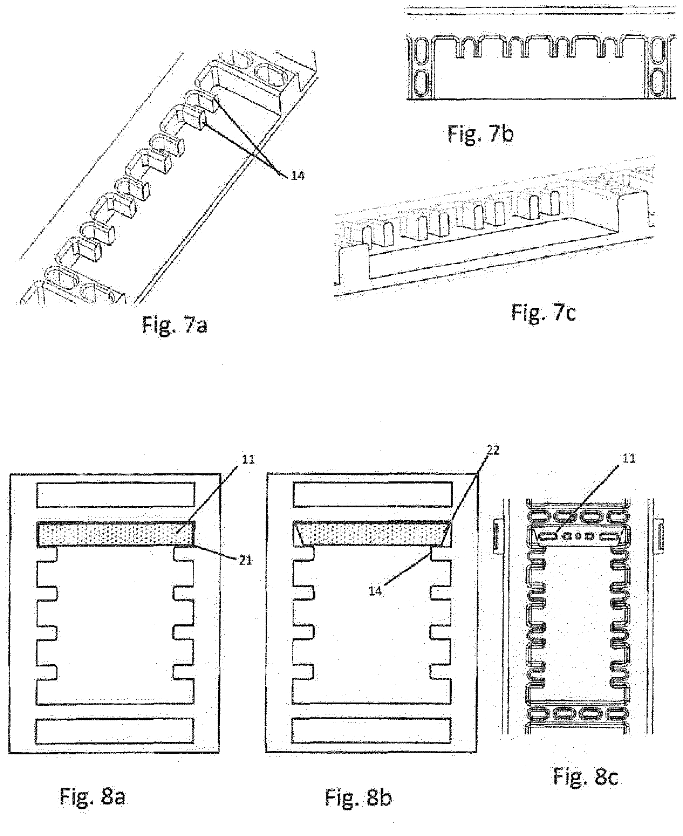

Die Stege oder die in Fig. 6a bis 6c gezeigten Vorsprünge (Stegansätze) 14 können an einer Seite und am Boden mit der umgebenden Struktur verbunden sein. Sie können aber auch nur an der Seite (was bevorzugt ist) oder nur am Boden mit der Struktur verbunden sein. Alternativen für eine Anordnung nur an einer Seite sind in Figuren 6a bis 6c sowie in den Fig. 7a bis 7c gezeigt (siehe insbesondere Fig. 7c). In Fig. 6a bis 6c sowie 7a bis 7c sind die Vorsprünge (Stegeinsätze) nur seitlich befestigt (angebunden). Dadurch hängen die Vorsprünge frei im Raum, so dass diese leichter verformt bzw. gebrochen werden können, um eine Überführung des Verriegelungselementes in die nächste Position zu erleichtern.

In Fig. 8a ist ein Ausschnitt analog Fig. 2 dargestellt, und zwar mit einem Verriegelungselement 11, das gerade Enden 21 aufweist. Alternativ (siehe Fig. 8b) kann das Verriegelungselement 11 schräge Enden 22 aufweisen, so dass eine auf die Vorsprünge 14 einwirkende Kraft eine erhöhte Flächenlast auf die Stege 14 bewirkt und deren elastische oder plastische Verformung oder deren Bruch erleichtert. Im Allgemeinen kann die geometrische Form des Verriegelungselementes so gewählt werden, dass eine einwirkende Kraft eine erhöhte Punkt- oder Flächenlast auf die Bereiche zwischen den arretierten Positionen bewirkt und deren elastische oder plastische Verformung oder deren Bruch erleichtert. Dies kann weiterhin beispielsweise durch eine trapezförmige Struktur erreicht werden (siehe Fig. 8b und 8c). Es ist auch möglich, die kraftbelastete Seite des Verriegelungselementes 11 konvex zu gestalten. Weiterhin kann das Verriegelungselement elastisch verformbar ausgebildet sein.

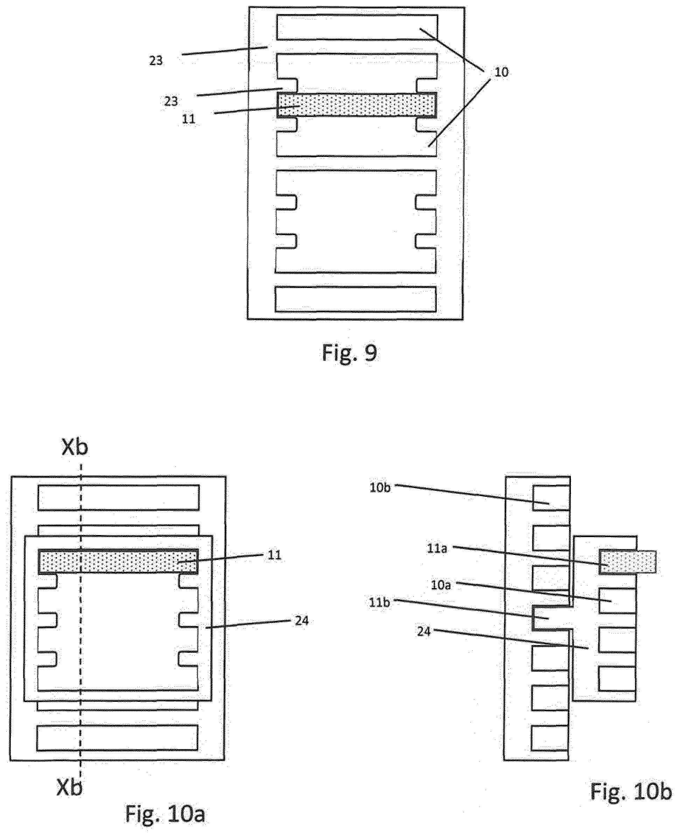

In einer weiteren Ausführungsform (siehe Fig. 9) kann immer nur eine bestimmte Anzahl von arretierten Positionen überwunden werden, bevor wieder eine nichtüberwindbare Position eingenommen wird. Dies kann beispielsweise dadurch realisiert werden, dass nur einzelne Zwischenbereiche 23 zwischen den Taschen 10 so eingestellt werden, dass diese ein Überwinden in die nächste Position ermöglichen. Beispielsweise kann jeder dritte oder jeder vierte Zwischenbereich 23 unüberwindbar sein (vgl. Fig. 9).

In einer weiteren Ausführungsform wird ein zusätzliches Bauteil 24 eingesetzt, das höhenverstellbar (aber ohne Kraftbegrenzungsmittel) - insbesondere über ein Verriegelungselement 11b, das ggf. in zugehörige Taschen 10 eingreifen kann - arretiert werden kann und das seinerseits mehrere Positionen zur Arretierung des Gurtsystems inklusive kraftbegrenzender Mittel definiert. In einer bevorzugten Ausführungsform kann das Gurtsystem zunächst immer in der obersten Position innerhalb des Bauteils 24 arretiert werden und nur bei Überschreiten der definierten Grenzkraft in eine weitere Position überführt werden. Beispielsweise weist das Bauteil 24 dazu Taschen 10a auf, in die ein Verriegelungselement 11a eingreifen kann.

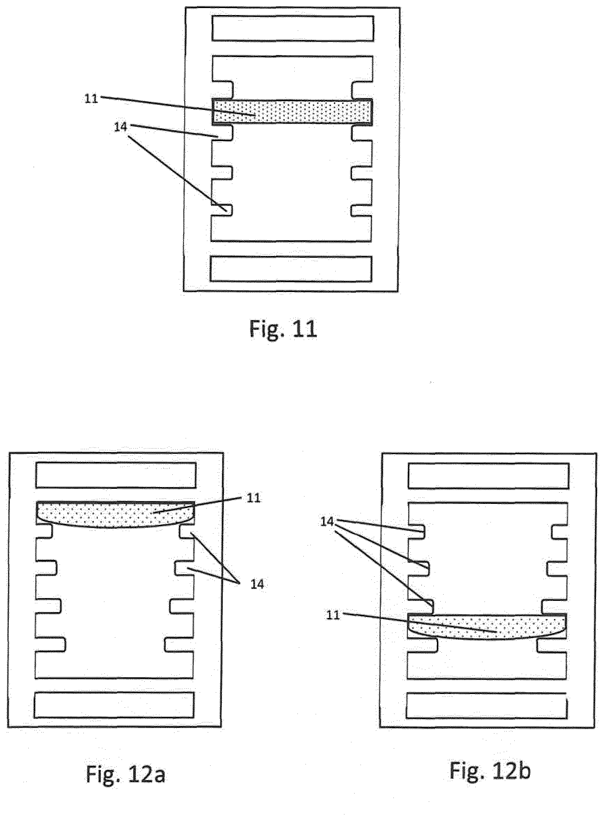

In einer weiteren bevorzugten Ausführungsform (siehe Fig. 11) ist die Grenzkraft, ab der die Kraftbegrenzung wirksam wird, nicht in allen Positionen gleich, sondern hängt von der Position ab, in der das Gurtsystem arretiert ist. Damit kann - unter Berücksichtigung der üblicherweise vorliegenden Korrelation zwischen Größe und Gewicht von Kindern - der oben beschriebenen Notwendigkeit Rechnung getragen werden, das Gewicht des im Sitz befindlichen Kindes bei der Auswahl der Kraftschwelle zu berücksichtigen. In verschiedenen Ausführungsformen kann dies durch eine geeignete Wahl der Stegdicke (Fig. 11) und/oder der Länge von verbleibenden Stegeinsätzen (Vorsprünge) und/oder durch die Materialstärke und/oder eine Federstärke einer Feder und/oder einen Winkel einer Schräge erfolgen.

Grundsätzlich können die verschiedenen Ausführungsformen auch beliebig miteinander kombiniert werden. Nur beispielsweise können Stegansätze (Vorsprünge) mit verschiedenen Längen mit einem Verriegelungselement mit konkaver Seite verbunden werden (siehe Fig. 12a sowie 12b).

Weiterhin können die oben dargestellten Lösungen und Strukturen auch beispielsweise auf Zahn- oder Lochleisten oder auf andere geeignete Strukturen, die beispielsweise ein form- und/oder kraftschlüssiges Eingreifen erlauben, übertragen werden.

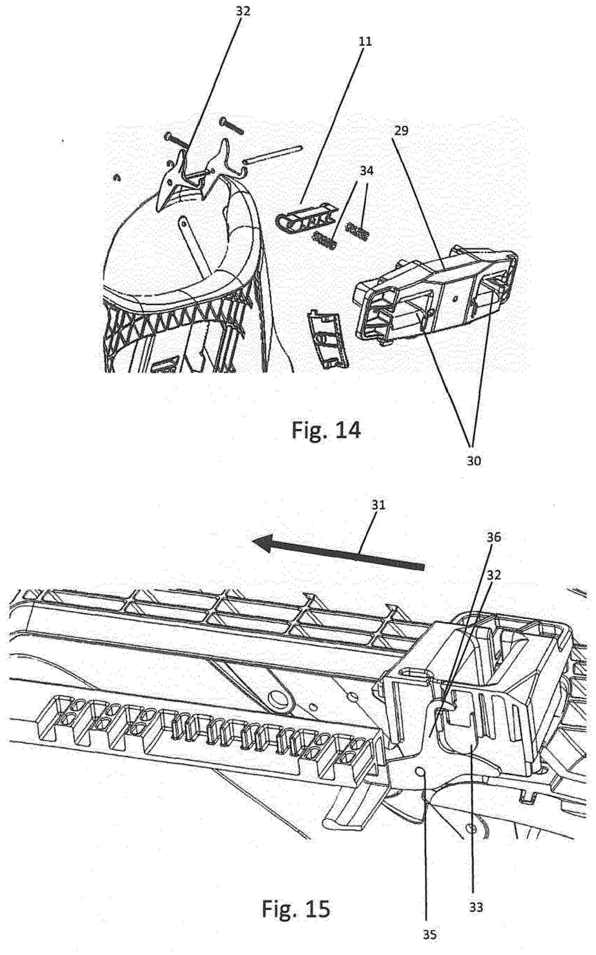

Fig. 13 zeigt eine Explosionsansicht eines erfindungsgemäßen Kindersitzes, umfassend einen Sitzbereich 25, einen Rückenabschnitt 26, ein Gurtsystem 27 mit Schultergurten 28 sowie einer Halteeinrichtung 29 zum Halten und Umlenken der Schultergurte 25. Die Halteeinrichtung 29 ist mit dem Verriegelungselement 11 verbunden, das wiederum in Taschen 10 eingreifen kann. Fig. 14 zeigt einen vergrößerten Ausschnitt aus Fig. 13 mit der Halteeinrichtung 29 und dem Verriegelungselement 11. In der Halteeinrichtung 29 sind Gurtführungen 30 angeordnet, durch die der Gurt geführt werden kann, so dass er gehalten und umgelenkt wird. Fig. 15 zeigt einen Stufenschnitt eines Ausschnitts gemäß Fig. 13. In Fig. 15 wirkt die von den Schultergurten 28 auf den Halteabschnitt wirkende Kraft (im Wesentlichen, zumindest komponentenhaft) in Richtung des Pfeiles 31, also in eine Richtung der Anordnung der Taschen 10.

Weiterhin erkennt man in Figur 15 Details einer Verstelleinrichtung, die ein gewolltes Einstellen der Position der Halteeinrichtung, insbesondere einer Höhe der Halteeinrichtung erlaubt. Konkret umfasst die Verstelleinrichtung ein (krallenförmiges) Betätigungselement 32, das bei einer Rotation um eine Achse 35 (in Figur 15 gegen den Uhrzeigersinn) das Verriegelungselement über einen (bogenförmigen) Anschlag 33 aus seiner Aufnahme (Tasche) gegen die Wirkung von (in Figur 14 gezeigten) Federn 34 herausdrückt. Das Betätigungselement 32 weist einen hakenförmigen, ggf. unterschnittenen Abschnitt 36 auf, der das Verriegelungselement gegen unbeabsichtigte Entriegelung sichert.

Generell sei angemerkt, dass die Kraft oder zumindest eine Komponente der Kraft, die vom Schultergurt auf die Halteeinrichtung im Falle eins Aufpralls wirkt, vorzugsweise von oben nach unten (parallel zur Rückenlehne) wirkt, jedoch auch (je nach konkreter Ausgestaltung der Gurtführung) von unten nach oben wirken kann. Es kann sogar sein, dass es eine Zwischenposition gibt und das Verriegelungselement aus der darunterliegenden Position nach oben und aus der darüberliegenden Position nach unten überführt wird (bzw. eine entsprechende Kraft wirkt).

Insgesamt wird ein Kindersitz mit Kraftbegrenzungsmitteln mit erhöhter Sicherheit bereitgestellt. Die Kraftbegrenzungsmittel können insbesondere erlauben, dass bei korrekter Einstellung der Gurtlage "automatisch" die optimalen Kraftbegrenzungsmittel bereitgestellt werden. Dabei kann die Grenzkraft ggf. niedriger als beim Stand der Technik gewählt werden, da mehrere Kraftbegrenzungsmittel nacheinander wirken können.

Gleichzeitig bietet die erfindungsgemäße Lösung ein hohes Maß an Komfort, da die Auswahl der Kraftbegrenzungsmittel nicht in einem separaten Schritt erfolgt, sondern automatisch mit der Einstellung der Gurtlage, ggf. in Kombination mit der Einstellung der Kopfstütze erfolgen kann. Diese Einstellung ist bei der Benutzung von Kindersitzen ohnehin oftmals notwendig. Insbesondere muss die Einstellung der Grenzkraft nicht mehr, wie früher üblich, zwingend durch Umhängen oder Umfädeln der Gurte vorgenommen werden, so dass der Kindersitz ausgebaut werden müsste. Vielmehr kann die Einstellung bequem, beispielsweise von der Vorderseite aus, erfolgen. Selbst eine Einstellung während der Benutzung ist bei geeigneter Ausführung möglich.

Zuletzt ist die erfindungsgemäße Lösung auch besonders einfach in der Herstellung, da ihre Realisierung mit geringem Aufwand gegenüber herkömmlichen Lösungen möglich ist. So kann beispielsweise auf hydraulische Elemente vollständig verzichtet werden. Weiterhin können die Kraftbegrenzungsmittel beispielsweise alleine durch eine geänderte Formgebung des ohnehin vorhandenen Arretierungsmechanismus erreicht werden. Es werden prinzipiell keine zusätzlichen Teile benötigt und sämtliche Teile können mit den üblichen Produktionsprozessen, etwa Spritzgießen, Extrusionsblasformen oder dergleichen, hergestellt werden. Es entsteht auch kein Aufwand durch gesonderte Montage.

### Bezugszeichen

- 10: Tasche
- 11: Verriegelungselement
- 12: Steg
- 13: Trennbereich
- 14: Vorsprung
- 15: Gerades Ende
- 16: Schräges Ende
- 17: Vorsprungspaar
- 18: Elastischer Vorsprung
- 19: (Blatt-) Feder
- 20: Schräge
- 21: Ende
- 22: Schräges Ende
- 23: Zwischenbereich
- 24: Bauteil
- 25: Sitzbereich
- 26: Rückenabschnitt
- 27: Gurtsystem
- 28: Schultergurt
- 29: Halteeinrichtung
- 30: Gurtführung
- 31: Pfeil
- 32: Betätigungselement
- 33: Anschlag
- 34: Feder
- 35: Achse
- 36: Abschnitt

## Patentansprüche

1. Kindersitz zur Anbringung auf einem Kraftfahrzeugsitz, umfassend
einen Sitzbereich (25) und einen Rückenabschnitt (26),
mindestens einen Schultergurt (28),
mindestens eine Halteeinrichtung (29) zum Festhalten und/oder Umlenken des Schultergurts (28), und
mindestens ein Kraftbegrenzungsmittel (12, 14, 17), das derart ausgebildet ist, dass die Halteeinrichtung bei Überschreiten einer vorbestimmten Grenzkraft, die vom Schultergurt oder von den Schultergurten im Falle eines Aufpralls auf die Halteeinrichtung (30) wirkt, von einer ersten arretierten Position in eine zweite arretierte Position überführt wird
wobei der Kindersitz weiterhin aufweist eine Verstelleinrichtung zum Einstellen von mindestens zwei verschiedenen Positionen, umfassend mindestens die erste und die zweite arretierte Position, der Halteeinrichtung (30) gegenüber dem Rückenabschnitt zur Anpassung der Gurtlänge und/oder -lage an die Größe und/oder das Gewicht eines in dem Kindersitz befindlichen Kindes.

2. Kindersitz nach Anspruch 1,
**dadurch gekennzeichnet, dass**
die Halteeinrichtung (30) über mindestens eine Rasteinrichtung in (den) mindestens zwei Positionen arretierbar ist, insbesondere in mindestens zwei Rastpositionen einrastet, wobei dazu vorzugsweise mindestens zwei komplementär ausgebildete Rastelemente, beispielsweise ein Vorsprung, insbesondere Verriegelungselement (11), und eine dazu korrespondierende Ausnehmung, insbesondere Tasche (10) vorgesehen sind.

3. Kindersitz nach einem der vorhergehenden Ansprüche,
**dadurch gekennzeichnet, dass**
die einzelnen Positionen durch einzelne Aufnahmen, insbesondere Taschen (10) und/oder Vorsprünge und/oder Verbindungsstege (12), die vorzugsweise Bestandteile eines einstückigen Bauteils sind, und/oder durch eine Zahnleiste und/oder eine Lochleiste definiert werden.

4. Kindersitz nach einem der vorhergehenden Ansprüche,
**dadurch gekennzeichnet, dass**
die Halteeinrichtung (29), vorzugsweise über die Verstelleinrichtung, in mindestens drei Positionen gebracht werden kann, wobei bei Überschreiten einer ersten Grenzkraft die nächste Position eingenommen wird und bei Überschreiten einer zweiten Grenzkraft eine weiter entfernt liegende, insbesondere übernächste, Position eingenommen wird.

5. Kindersitz nach einem der vorhergehenden Ansprüche,
**dadurch gekennzeichnet, dass**
die Halteeinrichtung (29) mit einer Kopfstütze verbunden ist und/oder gemeinsam mit der Kopfstütze verlagerbar ist.

6. Kindersitz nach einem der vorhergehenden Ansprüche,
**dadurch gekennzeichnet, dass**
die Verstelleinrichtung einen Griff, insbesondere zum vorzugsweise ziehenden Lösen der Arretierung, und/oder eine Feder, insbesondere Rückstellfeder, zum Herstellen der Arretierung umfasst.

7. Kindersitz nach einem der vorhergehenden Ansprüche, **dadurch gekennzeichnet, dass**
mindestens ein Abschnitt zwischen zwei Rastelementen insbesondere zwischen zwei Ausnehmungen, insbesondere Taschen bei Überwinden der Grenzkraft plastisch oder elastisch verformbar ist und/oder zerstört wird, insbesondere bricht oder reißt.

8. Kindersitz nach einem der vorhergehenden Ansprüche,
**dadurch gekennzeichnet, dass**
zwischen zwei Rastelementen mindestens ein Steg oder mindestens ein Stegansatz, vorzugsweise zwei Stegansätze, angeordnet ist/sind, der/die vorzugsweise bei Überschreiten einer vorbestimmten Grenzkraft plastisch verformt wird oder bricht derart, dass die Halteeinrichtung von der einen in die andere Position überführt wird, wobei vorzugsweise mehrere Stege oder Stegansätze vorgesehen sind, die verschieden dick ausgeführt sind.

9. Kindersitz nach einem der vorhergehenden Ansprüche,
**dadurch gekennzeichnet, dass**
die Halteeinrichtung (29), vorzugsweise über die Verstelleinrichtung, in mindestens drei arretierte Positionen, nämlich mindestens eine erste, eine zweite und eine dritte Position, gebracht werden kann, wobei eine Grenzkraft zum Verlagern von der ersten in die zweite Position höher oder niedriger, insbesondere um mindestens 5%, vorzugsweise mindesten 10 %, ist als eine Grenzkraft zum Verlagern von der zweiten in die dritte Position.

10. Kindersitz nach einem der vorhergehenden Ansprüche,
**dadurch gekennzeichnet, dass**
das mindestens eine Kraftbegrenzungsmittel eine Schrägfläche umfasst, die derart angeordnet und ausgebildet ist, dass ein Verriegelungselement (11) bei Überschreiten der Grenzkraft aus einer verriegelten Position herausgleitet, wobei die Schrägfläche vorzugsweise an dem Verriegelungselement (11) oder an einer Riegelaufnahme vorgesehen ist.

11. Kindersitz nach einem der vorhergehenden Ansprüche,
**dadurch gekennzeichnet, dass**
das Kraftbegrenzungsmittel ein zumindest abschnittsweise konvexes oder trapezförmiges Verriegelungselement (11) aufweist.

12. Kindersitz nach einem der vorhergehenden Ansprüche,
**dadurch gekennzeichnet, dass**
das Kraftbegrenzungsmittel zumindest eine Feder, insbesondere Blattfeder (19) umfasst.

13. Kindersitz nach einem der vorhergehenden Ansprüche,
**dadurch gekennzeichnet, dass**
die jeweilige Grenzkraft mindestens 500 N, vorzugsweise mindestens 1000 N, weiter vorzugsweise mindestens 1500 N und/oder höchstens 21000 N, vorzugsweise höchstens 17000 N, weiter vorzugsweise höchstens 15000 N beträgt.

14. Kindersitz nach einem der vorhergehenden Ansprüche,
**dadurch gekennzeichnet, dass**
sich die Positionen der Halteeinrichtung, die gewollt (vor der Fahrt) durch die Verstelleinrichtung eingestellt werden können zumindest teilweise von den Positionen, die im Falle eines Aufpralls durch das Wirken des
mindestens einen Kraftbegrenzungsmittels eingenommen werden können, unterscheiden,
vorzugsweise wobei die Verstelleinrichtung ein Verstellelement umfasst, das mehrere Positionen zur Einstellung der Gurtlänge oder -lage definiert und so gelagert ist, dass es bei Überschreiten einer Grenzkraft eine andere Position einnimmt oder
vorzugsweise wobei das Kraftbegrenzungsmittel ein Kraftbegrenzungselement umfasst, das ausgebildet ist, um die Halteeinrichtung bei Überschreiten einer vorbestimmten Grenzkraft, die vom Schultergurt auf die Halteeinrichtung wirkt, von der ersten in die zweite Position zu verlagern, wobei das Kraftbegrenzungselement in mehrere Positionen verbracht werden kann.

## Claims

1. Child seat for attachment to a motor vehicle seat, comprising
a seat region (25) and a back section (26),
at least one shoulder strap (28),
at least one retaining device (29) for holding and/or deflecting the shoulder strap (28), and
at least one force-limiting means (12, 14, 17), which is designed such that the retaining device is transferred from a first locked position to a second locked position upon exceeding a predetermined limit force acting from the shoulder strap or shoulder straps in the event of an impact on the retaining device (30) wherein the child seat further comprises an adjusting device for setting at least two different positions, comprising at least the first and the second locked position, of the retaining device (30) relative to the back section for adjusting the belt length and/or belt position to the size and/or weight of a child located in the child seat.

2. Child seat according to claim 1, **characterized in that** the retaining device (30) can be locked in (the) at least two positions via at least one latching device, in particular engages in at least two latching positions, wherein preferably at least two complementary latching elements, for example a projection, in particular locking element (11), and a recess corresponding thereto, in particular pocket (10), are provided for this purpose.

3. Child seat according to one of the preceding claims, **character- ized in** that the individual positions are defined by individual receptacles, in particular pockets (10) and/or projections and/or connecting webs (12), which are preferably components of an integral component, and/or by a toothed strip and/or a perforated strip.

4. Child seat according to one of the preceding claims, **character- ized in** that the retaining device (29) can be brought into at least three positions, preferably via the adjusting device, wherein when a first limit force is exceeded, the next position is taken and when a second limit force is exceeded, a position lying farther away, especially the next but one, is taken.

5. Child seat according to one of the preceding claims, **character** - **ized in** that the retaining device (29) is connected to a headrest and/or is displaceable together with the headrest.

6. Child seat according to one of the preceding claims, **characterized in that** the adjusting device comprises a handle, in particular for the preferably pulling release of the lock, and/or a spring, in particular return spring, for producing the lock.

7. Child seat according to one of the preceding claims, **character**- **ized in** that when overcoming the limiting force at least a section between two latching elements, in particular between two recesses, in particular pockets, is plastically or elastically deformable and/or destroyed, in particular breaks or ruptures.

8. Child seat according to one of the preceding claims, **character**- **ized in** that between two latching elements at least one web or at least one web projection, preferably two web projections, is/are arranged, which is/are preferably plastically deformed or breaks when a predetermined limit force is exceeded, such that the retaining device is transferred from one to the other position, wherein preferably a plurality of webs or web projections are provided, which are made of different thickness.

9. Child seat according to one of the preceding claims, **character**- **ized in** that the retaining device (29) can be brought, preferably via the adjusting device, into at least three locked positions, namely at least a first, a second and a third position, wherein a limit force for displacement from the first to the second position is higher or lower, in particular by at least 5%, preferably by at least 10%, than a limit force for displacement from the second to the third position.

10. Child seat according to one of the preceding claims, **characterized in that** the at least one force-limiting means comprises an inclined surface which is arranged and formed such that a locking element (11) slides out of a locked position when the limit force is exceeded, wherein the inclined surface is preferably provided on the locking element (11) or on a bolt receptacle.

11. Child seat according to one of the preceding claims, **character**- **ized** in that the force-limiting means has an at least partially convex or trapezoidal locking element (11).

12. Child seat according to one of the preceding claims, **character**- **ized in** that the force-limiting means comprises at least one spring, in particular a leaf spring (19).

13. Child seat according to one of the preceding claims, **character**- **ized in** that the respective limit force is at least 500 N, preferably at least 1000 N, more preferably at least 1500 N and/or at most 21000 N, preferably at most 17000 N, more preferably at most 15000 N.

14. Child seat according to one of the preceding claims, **character**- **ized in** that the positions of the retaining device, which can be set intentionally (before the drive) by the adjusting device, can differ at least partially from the positions which are assumed in the event of an impact by the action of the at least one force-limiting means, preferably wherein the adjusting device comprises an adjusting element which defines a plurality of positions for setting the belt length or the belt position and is mounted so that it occupies a different position when exceeding a limit force or
preferably wherein the force-limiting means comprises a force-limiting element which is formed in order to displace the retaining device from the first to the second position when a predetermined limit force acting from the shoulder strap on the retaining device is exceeded, wherein the force-limiting element can be moved into a plurality of positions.

## Revendications

1. Siège pour enfant destiné à être installé sur un siège de véhicule automobile, comprenant
une zone d'assise (25) et une section de dossier (26),
au moins une sangle d'épaule (28),
au moins un dispositif de maintien (29) pour maintenir et/ou renvoyer la sangle d'épaule (28), et
au moins un moyen de limitation de force (12, 14, 17), qui est conçu de telle sorte qu'en cas de dépassement d'une force limite prédéfinie, laquelle est exercée sur le dispositif de maintien (30) par la sangle d'épaule ou par des sangles d'épaule dans le cas d'une collision, le dispositif de maintien est transféré d'une première position bloquée à une deuxième position bloquée,
le siège pour enfant comprenant en outre un dispositif de réglage pour régler au moins deux positions différentes, comprenant au moins la première et la deuxième position bloquée, le dispositif de maintien (30) en face de la section de dossier pour ajuster la longueur et/ou la position de la sangle à la taille et/ou au poids d'un enfant se trouvant dans le siège pour enfant.

2. Siège pour enfant selon la revendication 1,
**caractérisé en ce que**
le dispositif de maintien (30) peut être bloqué dans (les) au moins deux positions par l'intermédiaire d'au moins un dispositif d'encliquetage, en particulier s'encliquette dans au moins deux positions d'encliquetage. À cet effet, il est prévu de préférence au moins deux éléments d'encliquetage de forme complémentaire, par exemple une saillie, en particulier un élément de verrouillage (11), et un évidement correspondant, en particulier une poche (10).

3. Siège pour enfant selon l'une quelconque des revendications précédentes,
**caractérisé en ce que**
les positions individuelles sont définies par des logements individuels, en particulier des poches (10) et/ou des saillies et/ou des barrettes de liaison (12) qui sont de préférence des composants d'un composant monobloc et/ou par une baguette dentée et/ou une baguette perforée.

4. Siège pour enfant selon l'une quelconque des revendications précédentes,
**caractérisé en ce que**
le dispositif de maintien (29) peut être amené dans au moins trois positions, de préférence par l'intermédiaire du dispositif de réglage, la position suivante étant prise en cas de dépassement d'une première force limite et une position plus éloignée, en particulier la position après la suivante, étant prise en cas de dépassement d'une deuxième force limite.

5. Siège pour enfant selon l'une quelconque des revendications précédentes,
**caractérisé en ce que**
le dispositif de maintien (29) est relié à un appui-tête et/ou peut être déplacé conjointement avec l'appui-tête.

6. Siège pour enfant selon l'une quelconque des revendications précédentes,
**caractérisé en ce que**
le dispositif de réglage comprend une poignée, en particulier pour le déblocage de préférence par traction du dispositif d'arrêt, et/ou un ressort, en particulier un ressort de rappel, pour réaliser le dispositif d'arrêt.

7. Siège d'enfant selon l'une quelconque des revendications précédentes, **caractérisé en ce qu'**au moins une section entre deux éléments d'encliquetage, en particulier entre deux évidements, en particulier des poches, est déformable plastiquement ou élastiquement et/ou est détruite, en particulier se casse ou se déchire, lors du dépassement de la force limite.

8. Siège pour enfant selon l'une quelconque des revendications précédentes,
**caractérisé en ce qu'**
entre deux éléments d'encliquetage est/sont disposée(s) au moins une barrette ou au moins une garniture de barrette, de préférence deux garnitures de barrette, qui est/sont de préférence déformée(s) plastiquement ou se rompt(ent) en cas de dépassement d'une force limite prédéterminée de telle sorte que le dispositif de maintien est transféré d'une position à l'autre, plusieurs barrettes ou garnitures de barrettes étant de préférence prévues, qui sont réalisées avec une épaisseur différente.

9. Siège pour enfant selon l'une quelconque des revendications précédentes,
**caractérisé en ce que**
le dispositif de maintien (29) peut être amené, de préférence par l'intermédiaire du dispositif de réglage, dans au moins trois positions bloquées, à savoir au moins une première, une deuxième et une troisième positions, une force limite pour le déplacement de la première à la deuxième position étant supérieure ou inférieure, en particulier d'au moins 5 %, de préférence d'au moins 10 %, à une force limite pour le déplacement de la deuxième à la troisième position.

10. Siège pour enfant selon l'une quelconque des revendications précédentes,
**caractérisé en ce que**
l'au moins un moyen de limitation de force comprend une surface inclinée qui est disposée et conçue de telle sorte qu'un élément de verrouillage (11) glisse hors d'une position verrouillée en cas de dépassement de la force limite, la surface inclinée étant prévue de préférence sur l'élément de verrouillage (11) ou sur un logement de verrou.

11. Siège pour enfant selon l'une quelconque des revendications précédentes,
**caractérisé en ce que**
le moyen de limitation de force présente un élément de verrouillage (11) convexe ou trapézoïdal au moins par sections.

12. Siège pour enfant selon l'une quelconque des revendications précédentes,
**caractérisé en ce que**
le moyen de limitation de force comprend au moins un ressort, en particulier un ressort à lame (19).

13. Siège pour enfant selon l'une quelconque des revendications précédentes,
**caractérisé en ce que**
la force limite respective est d'au moins 500 N, de préférence d'au moins 1000 N, de préférence d'au moins 1500 N et/ou d'au plus 21000 N, de préférence d'au plus 17000 N, de préférence encore d'au plus 15000 N.

14. Siège pour enfant selon l'une quelconque des revendications précédentes,
**caractérisé en ce que**
les positions du dispositif de maintien qui peuvent être réglées volontairement (avant le trajet) par le dispositif de réglage diffèrent au moins partiellement des positions qui peuvent être prises en cas de collision par l'action de l'au moins un moyen de limitation de force,
de préférence, le dispositif de réglage comprend un élément de réglage qui définit plusieurs positions pour le réglage de la longueur ou de la position de la sangle et qui est logé de telle sorte qu'il prend une autre position en cas de dépassement d'une force limite ou
de préférence, dans lequel le moyen de limitation de force comprend un élément de limitation de force qui est conçu pour déplacer le dispositif de maintien de la première à la deuxième position en cas de dépassement d'une force limite prédéterminée agissant depuis la sangle d'épaule sur le dispositif de maintien, l'élément de limitation de force pouvant être amené dans plusieurs positions.
